# EUROPEAN PATENT APPLICATION

(11) **EP 4 567 577 A1**
(43) Date of publication of application: **11.06.2025**
(21) Application number: 23861955.5
(22) Date of filing: 15.06.2023
(51) Int. Cl.: G06F 3/06

(54) **DATA PROCESSING METHOD AND APPARATUS**

(30) Priority: 06.09.2022 CN 202211082775
(71) Applicant: Huawei Technologies Co., Ltd., Shenzhen, Guangdong 518129 (CN)
(72) Inventor: ZOU, Ming, Shenzhen, Guangdong 518129 (CN); NIU, Haoxin, Shenzhen, Guangdong 518129 (CN); ZHANG, Jian, Shenzhen, Guangdong 518129 (CN); CHEN, Tao, Shenzhen, Guangdong 518129 (CN)
(74) Representative: Goddar, Heinz J.
(86) International application number: PCT/CN2023/100314
(87) International publication number: WO 2024/051252

(57) **Abstract**

A data processing method and apparatus (60) are provided, and relate to the storage field. The method includes: receiving configuration information (S201); and updating a first encryption attribute of a storage pool to a second encryption attribute based on the configuration information (S202). This method is used to improve storage performance of the storage pool.

## Description

This application claims priority to Chinese Patent Application No. 202211082775.9, filed with the China National Intellectual Property Administration on September 6, 2022 and entitled "DATA PROCESSING METHOD AND APPARATUS", which is incorporated herein by reference in its entirety.

### TECHNICAL FIELD

This application relates to the computer field, and in particular, to a data processing method and apparatus.

### BACKGROUND

With development of information technologies, an amount of data that needs to be stored for each service is increasing. In the conventional technology, storage resources of one or more storage devices may be integrated into one storage pool, to implement storage of large-scale data.

Currently, on the one hand, when data in the storage pool needs to be encrypted, an encryption attribute of the storage pool is pre-configured as "encrypted" when the storage pool is created, so that to-be-written data is encrypted subsequently based on the encryption attribute of the storage pool and written to the storage pool. On the other hand, when data in the storage pool does not need to be encrypted, an encryption attribute of the storage pool is pre-configured as "non-encrypted" when the storage pool is created, so that to-be-written data is not encrypted subsequently based on the encryption attribute of the storage pool and written to the storage pool.

### SUMMARY

This application provides a data processing method and apparatus, to resolve a problem that an encryption attribute of a storage pool can be configured only when the storage pool is created and consequently, the storage pool is inflexibly used.

According to a first aspect, a data processing method is provided. The method includes: receiving configuration information; and updating a first encryption attribute of a storage pool to a second encryption attribute based on the configuration information.

In the method, a function of switching an encryption attribute is added to the storage pool, so that the encryption attribute of the storage pool can be updated based on the configuration information and an actual requirement in a process of using the storage pool. In this way, storage performance of the storage pool is improved.

In an implementation, the method further includes: recording a timestamp of updating the first encryption attribute of the storage pool to the second encryption attribute.

In this implementation, it is considered that a storage pool whose encryption attribute can be switched may include two types of data: encrypted data and unencrypted data. Therefore, a timestamp of switching the encryption attribute is recorded, so that the encrypted data and the unencrypted data can be distinguished based on the timestamp and time at which each piece of data is written to the storage pool.

In an implementation, before the updating a first encryption attribute of a storage pool to a second encryption attribute based on the configuration information, the method further includes: writing first data to the storage pool based on the current first encryption attribute of the storage pool.

In an implementation, the method further includes: rewriting the first data to the storage pool based on the second encryption attribute of the storage pool.

In the foregoing manner, data of the first encryption attribute in the storage pool may be converted into data of data of the second encryption, so that an encryption attribute corresponding to each piece of data in the storage pool is consistent with a current encryption attribute of the storage pool.

In an implementation, the writing first data to the storage pool based on the current first encryption attribute of the storage pool includes: writing the first data and a first identifier to the storage pool based on the current first encryption attribute of the storage pool. The first identifier indicates that the first data corresponds to the first encryption attribute.

In the foregoing implementation, to facilitate determining, when data is read subsequently, whether the data is encrypted, in the method provided in this embodiment, it is considered that an identifier (namely, the first identifier corresponding to the first data in the foregoing descriptions) that indicates whether the data is encrypted may be configured, and the identifier and the data are written to the storage pool together. In this way, when the data is read, an encryption attribute corresponding to the data may be quickly determined based on the identifier.

In an implementation, the first identifier is stored in a data integrity field DIF corresponding to the first data in the storage pool.

In the foregoing implementation, the identifier is stored in the DIF corresponding to the data. In this way, when the data is read, whether the data is encrypted may be determined by reading an identifier located in a same sector as the data, to perform subsequent processing.

In an implementation, the first identifier is specifically stored in a logical block application tag Meta Tag of the data integrity field DIF corresponding to the first data in the storage pool.

In the foregoing implementation, the identifier may be stored in a Meta Tag field that carries user-defined information in a DIF corresponding to the data, so that the identifier corresponding to the data can be stored without changing a related existing protocol.

In an implementation, the first identifier is stored in a metadata file in the storage pool, and the metadata file is used to record metadata of data stored in the storage pool.

In the foregoing implementation, the identifier is stored in the metadata file. In this way, when the metadata of the data is read from the metadata file, whether the data is encrypted may be determined based on the identifier in the metadata, to perform subsequent processing.

In an implementation, the method further includes: receiving a read request, where the read request is used to request to read to-be-processed data; and reading the to-be-processed data based on an encryption attribute corresponding to the to-be-processed data, where the encryption attribute includes either "encrypted" or "non-encrypted".

In the foregoing implementation, when different data in the storage pool is read, data corresponding to the encryption attribute may be read based on different encryption attributes, to improve storage performance of the storage pool.

In an implementation, the reading the to-be-processed data based on an encryption attribute corresponding to the to-be-processed data includes: obtaining an attribute identifier that indicates the encryption attribute corresponding to the to-be-processed data; and reading the to-be-processed data based on the encryption attribute indicated by the attribute identifier.

In the foregoing implementation, when data in the storage pool is read, an encryption attribute corresponding to the data may be determined based on an identifier corresponding to the data, and the data is read based on the encryption attribute, to improve storage performance of the storage pool.

According to a second aspect, a data processing apparatus is provided, including: a communication unit, configured to receive configuration information; and an attribute updating unit, configured to update a first encryption attribute of a storage pool to a second encryption attribute based on the configuration information.

In an implementation, the attribute updating unit is further configured to record a timestamp of updating the first encryption attribute of the storage pool to the second encryption attribute.

In an implementation, the data processing apparatus further includes a read/write unit. The read/write unit is configured to write first data to the storage pool based on the current first encryption attribute of the storage pool.

In an implementation, the read/write unit is further configured to rewrite the first data to the storage pool based on the updated second encryption attribute of the storage pool.

In an implementation, that the read/write unit is configured to write first data to the storage pool based on the current first encryption attribute of the storage pool includes: the read/write unit is specifically configured to write the first data and a first identifier to the storage pool based on the current first encryption attribute of the storage pool, where the first identifier indicates that the first data corresponds to the first encryption attribute.

In an implementation, the first identifier is stored in a data integrity field DIF corresponding to the first data in the storage pool.

In an implementation, the first identifier is specifically stored in a logical block application tag Meta Tag of the data integrity field DIF corresponding to the first data in the storage pool.

In an implementation, the first identifier is stored in a metadata file in the storage pool, and the metadata file is used to record metadata of data stored in the storage pool.

In an implementation, the communication unit is further configured to receive a read request. The read request is used to request to read to-be-processed data. The read/write unit is configured to read the to-be-processed data based on an encryption attribute corresponding to the to-be-processed data. The encryption attribute includes either "encrypted" or "non-encrypted".

In an implementation, that the read/write unit is configured to read the to-be-processed data based on an encryption attribute corresponding to the to-be-processed data includes: the read/write unit is configured to obtain an attribute identifier that indicates the encryption attribute corresponding to the to-be-processed data; and the read/write unit is configured to read the to-be-processed data based on the encryption attribute indicated by the attribute identifier.

According to a third aspect, a data processing apparatus is provided, including a storage and a processor. The storage is configured to store computer instructions, and the processor is configured to invoke the computer instructions from the storage and run the computer instructions, to implement the method according to any one of the first aspect or the implementations of the first aspect.

According to a fourth aspect, a storage system is provided, including a controller and at least one storage node. The storage node is configured to store data, and the controller is configured to perform the method according to any one of the first aspect or the implementations of the first aspect.

According to a fifth aspect, a storage system is provided, including a plurality of storage servers. The plurality of storage servers are configured to store data, and one or more of the plurality of storage servers are configured to perform the method according to any one of the first aspect or the implementations of the first aspect.

According to a sixth aspect, a chip is provided, including a storage and a processor. The storage is configured to store computer instructions, and the processor is configured to invoke the computer instructions from the storage and run the computer instructions, to implement the method according to any one of the first aspect or the implementations of the first aspect.

According to a seventh aspect, a computer-readable storage medium is provided. The storage medium stores a computer program, and when the computer program is executed by a processor, the method according to any one of the first aspect or the implementations of the first aspect is implemented.

According to an eighth aspect, a computer program product is provided. The computer program product includes instructions, and when the instructions are run on a processor, the method according to any one of the first aspect or the implementations of the first aspect is implemented.

### BRIEF DESCRIPTION OF DRAWINGS

FIG. 1 is a diagram of a structure of a storage system according to an embodiment of this application;
FIG. 2 is a schematic flowchart 1 of a data processing method according to an embodiment of this application;
FIG. 3 is a schematic flowchart 2 of a data processing method according to an embodiment of this application;
FIG. 4 is a schematic flowchart 3 of a data processing method according to an embodiment of this application;
FIG. 5 is a schematic flowchart 4 of a data processing method according to an embodiment of this application;
FIG. 6 is a schematic flowchart 5 of a data processing method according to an embodiment of this application;
FIG. 7 is a diagram 1 of a structure of a data processing apparatus according to an embodiment of this application; and
FIG. 8 is a diagram 2 of a structure of a data processing apparatus according to an embodiment of this application.

### DESCRIPTION OF EMBODIMENTS

The following describes the technical solutions in embodiments with reference to the accompanying drawings in embodiments. To clearly describe the technical solutions in embodiments, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments, words such as "example" or "for example" are used to give an example, an illustration, or a description. Any embodiment or design scheme described as an "example" or "for example" in embodiments should not be explained as being more preferred or having more advantages than another embodiment or design scheme. Exactly, use of the terms such as "example" or "for example" is intended to present a related concept in a specific manner for ease of understanding.

For ease of understanding embodiments, an application scenario of the technical solutions provided in embodiments is first described.

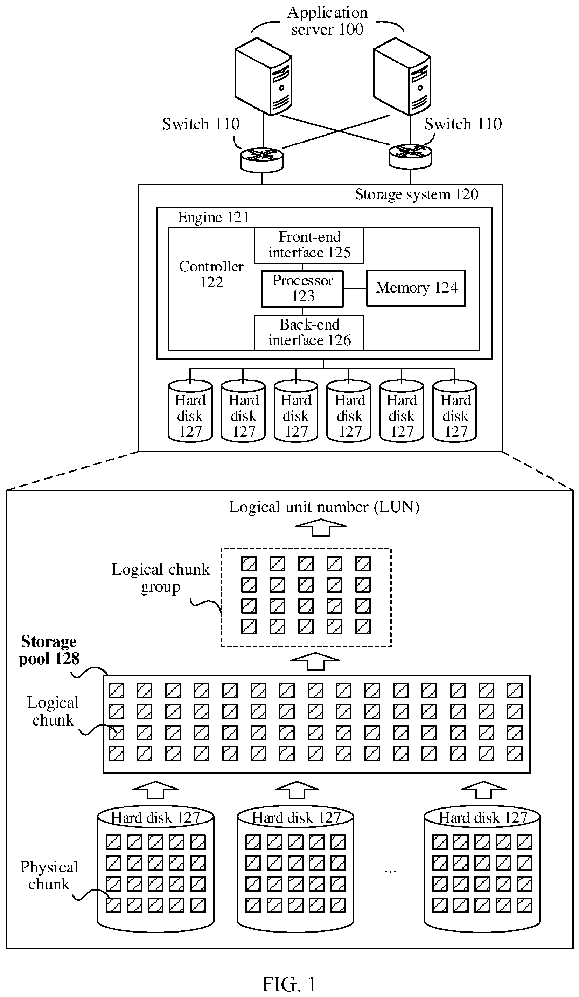

For example, FIG. 1 is a diagram of a structure of a storage system according to an embodiment. In the storage system shown in FIG. 1, user data in a storage system 120 may be stored by running an application program. A computer running the application program may be referred to as an "application server", and an application server 100 may be a physical machine or a virtual machine. The application server 100 includes but is not limited to a desktop computer, a server, a notebook computer, and a mobile device. The application server 100 accesses the storage system 120 through a switch 110, to access the user data. However, the switch 110 is only an optional device, and the application server 100 may also directly communicate with the storage system 120 through a network. Alternatively, the switch 110 may be replaced with an Ethernet switch, an InfiniBand switch, a RoCE (RDMA over Converged Ethernet) switch, or the like.

The storage system 120 is a device or a device cluster configured to store the user data. Specifically, in an actual application process, the storage system 120 may be a centralized storage system. The centralized storage system is featured by a unified entry, and all data from an external device such as the application server passes through the entry.

As shown in FIG. 1, the entry of the centralized storage system may be specifically an engine 121 of the centralized storage system. The engine 121 may include one or more controllers. In FIG. 1, one controller 122 is used as an example for description. In addition, when there are a plurality of controllers in the engine 121, the plurality of controllers may serve as backups of each other by using a mirror channel. When one controller is faulty, another controller may take over a service of the faulty controller, to avoid unavailability that is of the entire storage system and that is caused by a hardware fault.

In addition, the engine 121 may further include a front-end interface 125 and a back-end interface 126. The front-end interface 125 is configured to communicate with the application server 100, to provide a storage service for the application server 100. The back-end interface 126 is configured to communicate with a hard disk 127, to expand a capacity of the storage system. The engine 121 may be connected to more hard disks 127 through the back-end interface 126, to form a very large storage resource pool.

In addition, the controller 122 may include a processor 123 and a memory 124. The processor 112 may be a central processing unit (central processing unit, CPU), is configured to process a data access request from an outside of the storage system (for example, the application server or another storage system), and is also configured to process a request that occurs inside the storage system. For example, when receiving, through the front-end interface 125, a data write request sent by the application server 100, the CPU 123 temporarily stores user data in the data write request in the memory 124. When a total amount of user data in the memory 124 reaches a specific threshold, the CPU 123 sends, through the back-end interface, the user data stored in the memory 124 to the hard disk 127 for persistent storage.

The memory 124 is an internal memory that directly exchanges data with the processor. The memory 124 may read/write the data at any time, has a high read/write speed, and may serve as a temporary data memory of an operating system or another running program. The memory 124 may include a plurality of types of storages. For example, the memory may be a random access memory, or may be a read-only memory (Read Only Memory, ROM). For example, the random access memory is a dynamic random access memory (Dynamic Random Access Memory, DRAM) or a storage class memory (Storage Class Memory, SCM). The DRAM is a semiconductor memory, and is a volatile memory (volatile memory) device like most random access memories (Random Access Memories, RAMs). The SCM is a composite storage technology that combines characteristics of both a conventional storage apparatus and a storage. The SCM can provide a higher read/write speed than the hard disk, but is slower than the DRAM in an access speed and is cheaper than the DRAM in costs. However, the DRAM and the SCM are merely examples for description in embodiments. The memory may further include another random access memory, for example, a static random access memory (Static Random Access Memory, SRAM). For example, the read-only memory may be a programmable read-only memory (programmable read-only memory, PROM), an erasable programmable read-only memory (erasable programmable read-only memory, EPROM), or the like. In addition, the memory 124 may also be a dual in-line memory module or a dual in-line memory module (Dual In-line Memory Module, DIMM), namely, a module including the DRAM, or may be a solid state disk (Solid State Disk, SSD). In an actual application, a plurality of memories 124 and different types of memories 124 may be configured in the controller 122. A quantity and types of the memories 124 are not limited in this embodiment. In addition, the memory 124 may be configured to have a power protection function. The power protection function means that data stored in the memory 124 is not lost when a system is powered off and then powered on again. The memory having the power protection function is referred to as a nonvolatile memory.

It should be noted that FIG. 1 shows only one engine 121. However, in an actual application, the storage system may include two or more engines 121, and redundancy or load balancing is performed among a plurality of engines 121. In addition, in an implementation, the engine 121 may further include a hard disk slot. In this case, the hard disk 127 may be directly deployed in the engine 121, and the back-end interface 126 is an optional configuration. When storage space of the system is insufficient, more hard disks or hard disk enclosures may be connected through the back-end interface 126.

In addition, it should be noted that FIG. 1 is merely an example diagram of a structure of a centralized storage system. In some other application scenarios, the storage system 120 may include a plurality of independent storage servers. The storage servers may communicate with each other. Each storage server may separately include hardware components such as a processor, a memory, a network adapter, and a hard disk. The processor and the memory are configured to provide a computing resource. The processor is configured to process a data access request from an outside of the storage server. The memory is an internal memory that directly exchanges data with the processor. The memory may read/write data at any time, has a very high speed, and may serve as a temporary data memory of an operating system or another running program. The hard disk is configured to provide a storage resource, for example, store data. The hard disk may be a magnetic disk or another type of storage medium, for example, a solid-state drive or a shingled magnetic recording hard disk. In addition, the storage server may further include a network adapter configured to communicate with the application server. It is easily understood that a framework structure of the storage system to which the technical solutions provided in this application are applied may not be limited in this embodiment.

Further, from a perspective of a logical layer structure of the storage system, storage resources (for example, a plurality of hard disks 127 in the figure) included in the storage system 120 may be constructed into a storage pool (pool). When the application server 100 needs storage space, a part or all of the storage space may be allocated from the storage pool to the application server 100.

Specifically, as shown in FIG. 1, each hard disk may be divided into several physical chunks (chunk), and these physical chunks are mapped onto logical chunks, to form a storage pool (pool). The storage pool is used to provide storage space for an upper layer, and the storage space actually comes from the hard disks included in the storage system. Certainly, not all hard disks provide space for the storage pool. In an actual application, the storage system may include one or more storage pools, and one storage pool may include some or all hard disks. A plurality of logical chunks from different storage nodes (different storage nodes in FIG. 1 may be understood as different hard disks) form one logical chunk group (chunk group), and the logical chunk group is a minimum allocation unit of the storage pool.

When a storage service layer applies for storage space from the storage pool 120, the storage pool 120 may provide one or more logical chunk groups for the storage service layer. The storage service layer further virtualizes storage space provided by the logical chunk group into a logical unit (logical unit, LU) for use by the application server 100. Each logical unit has a unique logical unit number (logical unit number, LUN). Because the application server 100 can directly sense the logical unit number, a person skilled in the art usually directly uses the LUN to refer to the logical unit. Each LUN has a LUN ID, which is used to identify the LUN. A specific location of data in a LUN may be determined by a start address and a length (length) of the data. The start address is usually referred to as a logical block address (logical block address, LBA) by a person skilled in the art. It may be understood that three factors, namely, the LUN ID, the LBA, and the length, identify a determined address segment. A data access request generated by the application server usually carries the LUN ID, the LBA, and the length.

In a related technology, an encryption attribute (including "encrypted" or "non-encrypted") of a storage pool is preconfigured when the storage pool is created. When receiving a write request for writing data to the storage pool, a storage system encrypts the data (or does not encrypt the data) based on the previously configured encryption attribute, and writes the data into the storage pool. For example, on the one hand, when data in the storage pool needs to be encrypted, the encryption attribute of the storage pool is pre-configured as "encrypted" when the storage pool is created, so that to-be-written data is encrypted subsequently based on the encryption attribute of the storage pool and written to the storage pool. On the other hand, when data in the storage pool does not need to be encrypted, the encryption attribute of the storage pool is pre-configured as "non-encrypted" when the storage pool is created, so that to-be-written data is not encrypted subsequently based on the encryption attribute of the storage pool and written to the storage pool.

Further, if the encryption attribute of the storage pool needs to be changed (for example, from an encrypted storage pool to a non-encrypted storage pool or from a non-encrypted storage pool to an encrypted storage pool) in a process of using the storage pool, a new storage pool is usually created, and data in an original storage pool is migrated to the new storage pool as a whole, to implement conversion of the encryption attribute of the storage pool. In this way, extra overheads need to be occupied to create the storage pool and migrate the data. If the storage pool corresponds to a large quantity of upper-layer services, service running may be further affected in a data migration process.

For the foregoing problem, in embodiments, it is considered that if a function of switching the encryption attribute of the storage pool can be implemented in the process of using the storage pool, overheads generated when the storage pool is created and the data is migrated can be reduced, and storage performance of the storage pool can be improved.

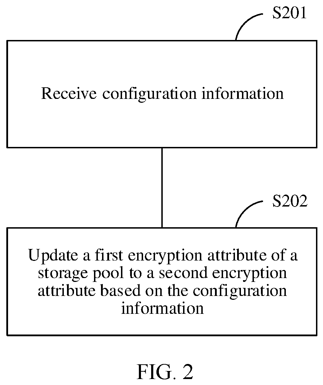

Further, an embodiment provides a data processing method. As shown in FIG. 2, in the method, after receiving configuration information (S201), a data processing apparatus may update an encryption attribute of a storage pool based on the configuration information, to update a first encryption attribute to a second encryption attribute (S202).

In the method, a function of switching the encryption attribute is added to the storage pool, so that the encryption attribute of the storage pool can be updated at any time based on an actual requirement in a process of using the storage pool. In this way, storage performance of the storage pool is improved.

The following describes the data processing method provided in this embodiment by using the storage system 120 shown in FIG. 1 as an example.

Specifically, based on different encryption attributes of the storage pool before and after updating, the data processing method provided in this embodiment may include two implementation processes:
A first implementation process is an implementation process of the data processing method provided in this embodiment in a case in which the encryption attribute of the storage pool is updated from "non-encrypted" to "encrypted".

A second implementation process is an implementation process of the data processing method provided in this embodiment in a case in which the encryption attribute of the storage pool is updated from "encrypted" to "non-encrypted".

Specifically, the following mainly describes in detail the implementation process of the data processing method provided in this embodiment by using the first implementation process (to be specific, the case in which the encryption attribute of the storage pool is updated from "non-encrypted" to "encrypted") as an example. It may be understood that a specific implementation process of the second implementation process (to be specific, the case in which the encryption attribute of the storage pool is updated from "encrypted" to "non-encrypted") may completely correspond to the first implementation process. Detailed descriptions of the second implementation process are not described in this embodiment.

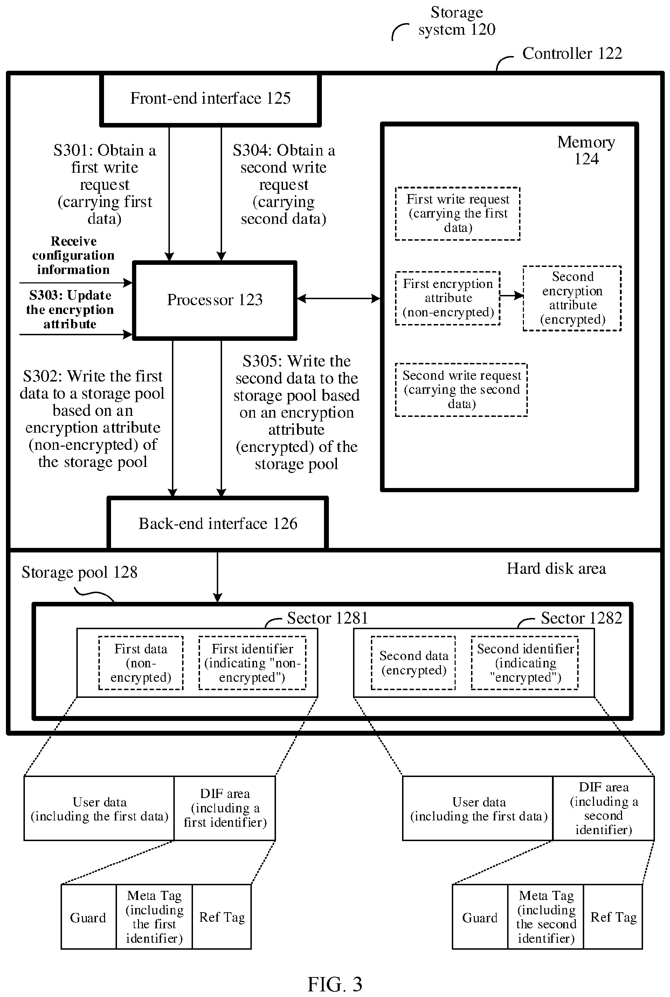

As shown in FIG. 3, the method includes the following steps.

S301: The storage system 120 obtains a write request.

The write request (for ease of distinguishing, the write request is referred to as "first write request" below) carries to-be-stored data (referred to as "first data" below).

In an implementation, the first write request may be an I/O request that is sent by an external device and that is received by the storage system 120. For example, as shown in FIG. 3, the first write request may be a write request that is from an application server 100 and that is received by a controller 122 in the storage system 120 through a front-end interface 125.

In another implementation, the first write request may alternatively be an I/O request generated when the storage system executes a service. For example, the service may be a garbage collection (garbage collection, GC) process performed by the storage system 120, and the first write request may be a write request for writing valid data from a collected logical chunk group to a new logical chunk group in the GC process.

Specifically, as shown in FIG. 3, after the storage system 120 obtains the first write request, a processor 123 may store the first write request in a memory 124 of the controller 122 for subsequent processing.

S302: The storage system 120 writes the first data to the storage pool based on the current first encryption attribute of the storage pool.

Specifically, as shown in FIG. 3, in the storage system 120, the processor 123 may invoke the first write request in the memory 124, to determine the first data carried in the first write request. Then, after it is determined, based on the current first encryption attribute (specifically, the current encryption attribute is "non-encrypted") of the storage pool, not to encrypt the first data, the first data is directly written to the storage pool through a back-end interface 126.

In an implementation, to facilitate determining, when the first data is read subsequently, whether the first data is encrypted, in the method provided in this embodiment, it is considered that a first identifier that indicates whether the first data is encrypted (in other words, indicates an encryption attribute corresponding to the first data) may be configured, and the first identifier and the first data are written to the storage pool together. In this way, when the first data is read, the encryption attribute corresponding to the first data may be quickly determined based on the first identifier.

The following describes a specific form of the first identifier in two design manners.

In a first design manner:
The first identifier may be stored in a same sector as the first data. For example, in FIG. 3, both the first data and the first identifier are stored in a sector 1281.

In this way, when the first data is read, whether the first data is encrypted may be determined by reading the first identifier located in a same sector 1281 as the first data, to perform subsequent processing.

Further, optionally, as shown in FIG. 3, the first identifier may be stored in a data integrity field (data integrity field, DIF) corresponding to the first data.

Further, optionally, the first identifier may be stored in a logical block application tag (Logical Block Application Tag, Meta Tag) field in the DIF corresponding to the first data.

Specifically, as shown in FIG. 3, the DIF may include a logical block guard (Logical Block Guard, Guard) field, a logical block application tag (Logical Block Application Tag, Meta Tag) field, and a logical block reference tag (Logical Block Reference Tag, Ref Tag) field.

Guard usually includes two bytes, and may carry a cyclic redundancy check (Cyclic Redundancy Check, CRC) checksum of data in a sector.

The Meta Tag field usually includes two bytes, and may carry user-defined and application-related information, for example, may be used to carry identification information of a LUN, a block status identifier, or the like.

The Ref Tag field usually includes four bytes, and mainly carries a logical block address (logical block address, LBA) of lower four bits of the data in the sector.

In the foregoing design, the first identifier may be stored in a Meta Tag field that carries user-defined information in the DIF corresponding to the first data, so that the first identifier can be stored without changing a related existing protocol.

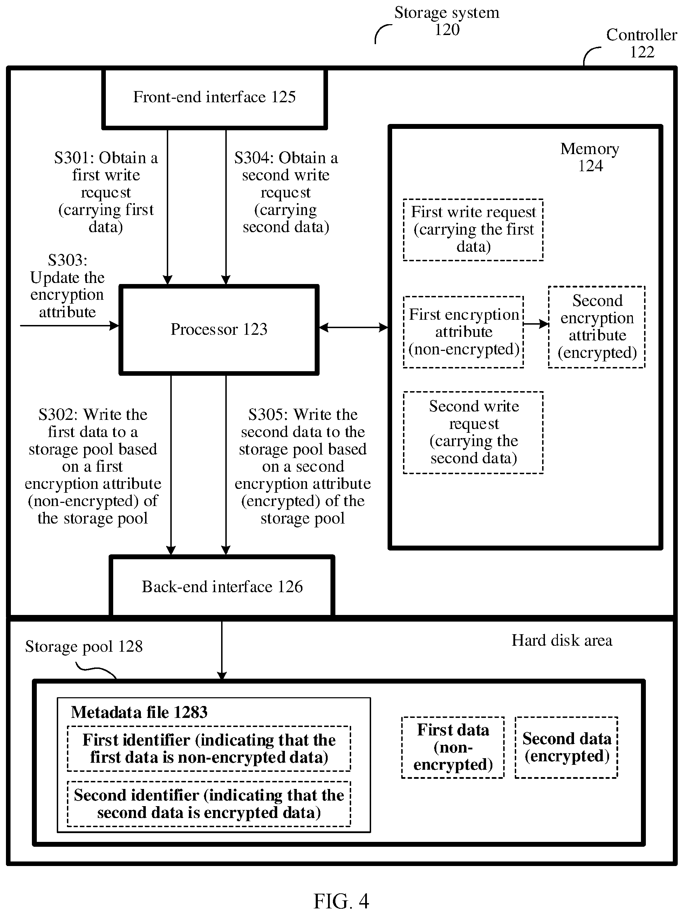

In a second design manner:
The first identifier may be stored in a metadata file in the storage pool. For example, as shown in FIG. 4, a metadata file 1283 is constructed in a storage pool 128. The metadata file 1283 is used to record metadata of data in the storage pool 128.

The metadata file 1283 includes the first identifier. For example, in the metadata file 1283, the first identifier may be recorded in metadata corresponding to the first data.

In this way, when the metadata of the first data is read from the metadata file 1283, whether the first data is encrypted may be determined based on the first identifier in the metadata, to perform subsequent processing.

S303: The storage system 120 updates the first encryption attribute of the storage pool to the second encryption attribute based on the configuration information.

The configuration information may be specifically input by a technical person to the storage system 120. In this way, after the storage system 120 receives the configuration information input by the technical person, the storage system 120 updates the first encryption attribute of the storage pool to the second encryption attribute. For another example, a trigger condition for updating the encryption attribute may be pre-configured in the storage system 120, and the storage system 120 generates the configuration information after detecting the trigger condition. In this way, after receiving the configuration information, the storage system 120 updates the first encryption attribute of the storage pool to the second encryption attribute.

In this implementation process, the first encryption attribute is "non-encrypted", and the first encryption attribute is "encrypted". Therefore, S303 may be understood as updating the encryption attribute of the storage pool from "non-encrypted" to "encrypted".

For example, the memory 124 in the storage system 120 stores the current encryption attribute of the storage pool. When the storage system 120 obtains the write request, the processor 123 determines, by viewing the current encryption attribute stored in the memory 124, whether to encrypt data in the write request.

For example, as shown in FIG. 3, after receiving an instruction for updating the encryption attribute of the storage pool, the storage system 120 may modify the encryption attribute in the memory 124, to implement updating of the first encryption attribute of the storage pool to the second encryption attribute.

After the first encryption attribute of the storage pool is updated to the second encryption attribute, when data is rewritten, the method further includes:
S304: The storage system 120 obtains a second write request.

The second write request carries second data.

Similar to the first write request, the second write request may be an I/O request that is sent by an external device and that is received by the storage system 120, or may be an I/O request generated when the storage system executes a service.

Specifically, as shown in FIG. 3, after the storage system 120 obtains the second write request, the processor 123 may store the second write request in the memory 124 of the controller 122 for subsequent processing.

S305: The storage system 120 writes the second data to the storage pool based on the current second encryption attribute of the storage pool.

Specifically, as shown in FIG. 3, in the storage system 120, the processor 123 may invoke the second write request in the memory 124, to determine the second data carried in the second write request. Then, after the second data is encrypted based on the current second encryption attribute (specifically, the current encryption attribute is "encrypted") of the storage pool, the encrypted second data is directly written to the storage pool through the back-end interface 126.

Similar to the first identifier corresponding to the first data, to facilitate determining, when the second data is read, whether the second data is encrypted, in the method provided in this embodiment, a second identifier that indicates whether the second data is encrypted (in other words, indicates an encryption attribute corresponding to the second data) may be configured, and the second identifier and the second data are written to the storage pool together. In this way, when the second data is read, an encryption attribute corresponding to the second data may be quickly determined based on the second identifier.

In addition, a specific form of the second identifier may also include two design manners:
In a first design manner:
The second identifier may be stored in a same sector as the second data. For example, in FIG. 3, both the second data and the second identifier are stored in a sector 1282.

Further, optionally, as shown in FIG. 3, the second identifier may be stored in a DIF corresponding to the second data.

Further, optionally, the second identifier may be stored in a Meta Tag field in the DIF corresponding to the second data.

In a second design manner:
The second identifier may be stored in a metadata file in the storage pool. For example, as shown in FIG. 4, the metadata file 1283 is constructed in the storage pool 128. The metadata file 1283 is used to record the metadata of the data in the storage pool 128.

The metadata file 1283 includes the second identifier. For example, in the metadata file 1283, the second identifier may be recorded in metadata corresponding to the second data.

For related descriptions of the two design manners of the second identifier, refer to the corresponding descriptions of the first identifier. Repeated content is not described herein again.

In the foregoing method provided in this embodiment, a function of updating the encryption attribute is added to the storage pool. When the first data is written to the storage pool, the first data may be first written to the storage pool based on the current first encryption attribute of the storage pool. Then, the first encryption attribute of the storage pool may be updated to the second encryption attribute, and when the second data is written to the storage pool, the second data is written to the storage pool based on the current second encryption attribute of the storage pool.

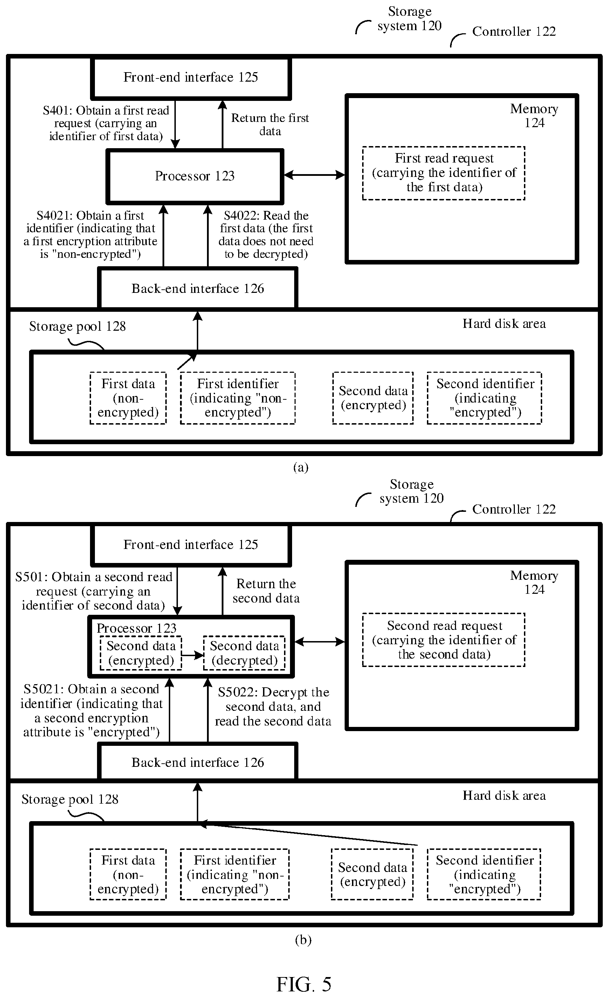

With reference to the foregoing process of writing the first data shown in FIG. 3 or FIG. 4, the following describes a process of reading the data in the storage pool in the method provided in this embodiment. As shown in (a) in FIG. 5, the method may further include the following steps.

S401: The storage system 120 receives a first read request.

The first read request carries an identifier of the first data.

For example, the first read request may be an I/O request that is sent by an external device and that is received by the storage system 120. For example, as shown in (a) in FIG. 5, the first read request may be a read request that is from the application server 100 and that is received by the controller 122 in the storage system 120 through the front-end interface 125.

For another example, the first read request may also be an I/O request generated when the storage system executes a service.

Specifically, as shown in (a) in FIG. 5, after the storage system 120 obtains the first read request, the processor 123 may store the first read request in the memory 124 of the controller 122 for subsequent processing.

S402: The storage system 120 reads the first data based on the first encryption attribute corresponding to the first data.

The first encryption attribute is "non-encrypted".

Specifically, S402 may include the following steps.

S4021: The storage system 120 obtains an attribute identifier that indicates the encryption attribute corresponding to the first data.

As described above, the first identifier indicates the encryption attribute corresponding to the first data. Specifically, the processor 123 in the storage system 120 may read, through the back-end interface 126, the first identifier recorded in the storage pool.

For example, when the first identifier shown in FIG. 3 is recorded in the Meta Tag field in the DIF corresponding to the first data, the processor 123 may obtain the first identifier from a sector corresponding to the first data in the storage pool.

For another example, when the first identifier shown in FIG. 4 is recorded in the metadata file, the processor 123 may obtain the first identifier from the metadata of the first data in the metadata file in the storage pool.

S4022: The storage system 120 reads the first data based on the encryption attribute indicated by the first identifier.

Specifically, the encryption attribute indicated by the first identifier is "non-encrypted", and it can be learned that the first data stored in the storage pool is non-encrypted data. Therefore, the first data may be directly read without being decrypted.

After the first data is read, as shown in (a) in FIG. 5, the storage system 120 may feed back the first data to the application server through the front-end interface 125.

In another implementation, with reference to the process of writing the second data shown in FIG. 3 or FIG. 4, when the second data is read, as shown in (b) of FIG. 5, the method may further include the following steps.

S501: The storage system 120 receives a second read request.

The second read request carries an identifier of the second data.

For example, the second read request may be an I/O request that is sent by an external device and that is received by the storage system 120. For example, as shown in (b) in FIG. 5, the second read request may be a read request that is from the application server 100 and that is received by the controller 122 in the storage system 120 through the front-end interface 125.

For another example, the second read request may also be an I/O request generated when the storage system executes a service.

Specifically, as shown in (b) in FIG. 5, after the storage system 120 obtains the second read request, the processor 123 may store the second read request in the memory 124 of the controller 122 for subsequent processing.

S502: The storage system 120 reads the second data based on the second encryption attribute corresponding to the second data.

The second encryption attribute is "encrypted".

Specifically, S502 may include the following steps.

S5021: The storage system 120 obtains an attribute identifier of the encryption attribute corresponding to second data.

As described above, the second identifier indicates the encryption attribute corresponding to the second data. Specifically, the processor 123 in the storage system 120 may read, through the back-end node 126, the second identifier recorded in the storage pool.

For example, when the second identifier shown in FIG. 3 is recorded in the Meta Tag field in the DIF corresponding to the second data, the processor 123 may obtain the second identifier from a sector corresponding to the second data in the storage pool.

For another example, when the second identifier shown in FIG. 4 is recorded in the metadata file, the processor 123 may obtain the second identifier from the metadata of the second data in the metadata file in the storage pool.

S5022: The storage system 120 reads the second data based on the encryption attribute indicated by the second identifier.

Specifically, the encryption attribute indicated by the second identifier is "encrypted", and it can be learned that the second data stored in the storage pool is encrypted data. Therefore, as shown in (b) in FIG. 5, after encrypted data of the first data is read from the storage pool, the processor 123 may decrypt the encrypted data of the second data, and then feed back the decrypted second data to the application server through the front-end interface 125.

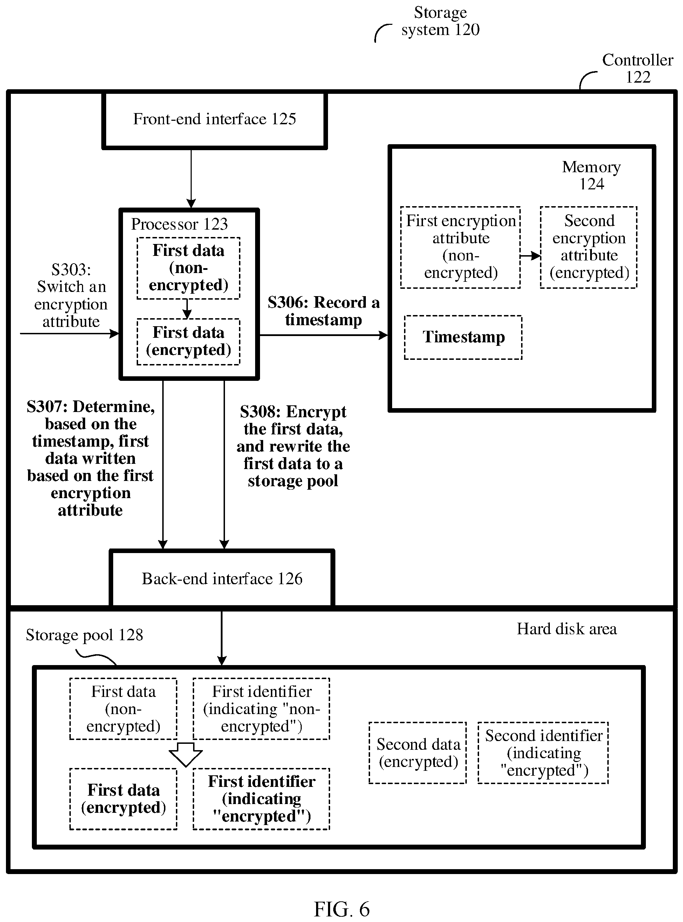

In an implementation, as shown in FIG. 6, in the data processing method in this embodiment, after the encryption attribute of the storage pool is updated (namely, S303), the method may further include:
S306: The storage system 120 records a timestamp of updating the first encryption attribute of the storage pool to the second encryption attribute.

In this implementation, it is considered that a storage pool whose encryption attribute can be updated may include two types of data: encrypted data and unencrypted data. Therefore, a timestamp of updating the encryption attribute is recorded, so that the encrypted data and the unencrypted data can be distinguished based on the timestamp and time at which each piece of data is written to the storage pool.

For example, as shown in FIG. 6, after updating the first encryption attribute of the storage pool to the second encryption attribute, the storage system 120 may record, in the memory 124, the timestamp of updating the encryption attribute, to distinguish the encrypted data and the unencrypted data based on the timestamp.

It should be noted that, to improve readability of the accompanying drawings, FIG. 6 shows only steps directly related to the timestamp after the encryption attribute of the storage pool is updated (namely, S303). For other processing steps (for example, steps of writing data or reading data) of the storage system 120 in FIG. 6, refer to corresponding descriptions in FIG. 3 to FIG. 5. Details are not described herein again.

In a possible design, to keep an encryption attribute corresponding to each piece of data in the storage pool consistent with the current encryption attribute of the storage pool, as shown in FIG. 6, the method further includes:
S307: The storage system 120 determines, from the storage pool based on the timestamp, data written to the storage pool based on the first encryption attribute.

For example, in the storage system 120, data written to the storage pool before the timestamp may be selected based on write time of each piece of data recorded in the metadata file of the storage pool and the timestamp. The data may be data written to the storage pool based on the first encryption attribute.

Specifically, the data written to the storage pool based on the first encryption attribute includes the first data.

S308: Rewrite the first data to the storage pool based on the second encryption attribute.

Specifically, the second encryption attribute is "encrypted". Therefore, S308 may specifically include: encrypted the first data, and rewriting the first data to the storage pool.

For example, in FIG. 6, after the unencrypted first data in the storage pool 128 is read through the back-end interface 126, the processor 123 encrypts the first data, and then rewrites the encrypted first data to the storage pool.

In the foregoing manner, data of the first encryption attribute in the storage pool may be converted into data of data of the second encryption, so that the encryption attribute corresponding to each piece of data in the storage pool is consistent with the current encryption attribute of the storage pool.

In addition, embodiments further provide a data processing apparatus. The data processing apparatus can be configured to perform some or all steps in the foregoing data processing method in embodiments.

It may be understood that, to implement functions in the foregoing data processing method, the data processing apparatus includes a corresponding hardware structure and/or software module for performing each function. A person skill in the art should be easily aware that, in combination with the units and method steps in the examples described in embodiments, the technical solutions provided in embodiments can be implemented by hardware or a combination of hardware and computer software. Whether a function is performed by hardware or hardware driven by computer software depends on particular application scenarios and design constraint conditions of the technical solutions.

In embodiments, the data processing apparatus may run in a hardware device that is in a storage system and that is configured to manage data storage. For example, the data processing apparatus may run in a controller in a centralized storage system or some hardware in the controller. For another example, the data processing apparatus may run in a storage server that manages a data read/write function in a distributed storage system or some hardware in the storage server.

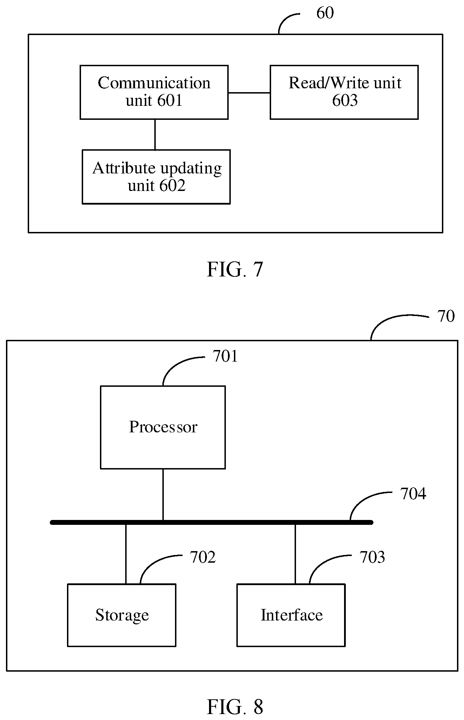

FIG. 7 is a diagram of a structure of a data processing apparatus according to an embodiment. A data processing apparatus 60 includes one or more of a communication unit 601, an attribute updating unit 602, and a read/write unit 603. The data processing apparatus may be configured to implement functions of some or all steps in the method in FIG. 2 to FIG. 6.

For example, the communication unit 601 is configured to perform one or more of S201 in FIG. 2, S301 and S304 in FIG. 3 and FIG. 4, and S401 and S501 in FIG. 5.

The attribute updating unit 602 is configured to perform one or more of S202 in FIG. 2, S303 in FIG. 3 and FIG. 4, and S306 in FIG. 6.

The read/write unit 603 is configured to perform one or more of S201 and S203 in FIG. 2, S302 and S305 in FIG. 3 and FIG. 4, S402 and S503 in FIG. 5, and S308 in FIG. 6.

Specifically, the communication unit 601 is configured to receive configuration information. The attribute updating unit 602 is configured to update a first encryption attribute of a storage pool to a second encryption attribute based on the configuration information.

Optionally, the attribute updating unit 602 is further configured to record a timestamp of updating the first encryption attribute of the storage pool to the second encryption attribute.

Optionally, the read/write unit 603 is configured to write first data to the storage pool based on the current first encryption attribute of the storage pool.

Optionally, the read/write unit 603 is further configured to rewrite the first data to the storage pool based on the updated second encryption attribute of the storage pool.

Optionally, that the read/write unit 603 is configured to write first data to the storage pool based on the current first encryption attribute of the storage pool includes:
the read/write unit 603 is specifically configured to write the first data and a first identifier to the storage pool based on the current first encryption attribute of the storage pool. The first identifier indicates that the first data corresponds to the first encryption attribute.

Optionally, the first identifier is stored in a data integrity field DIF corresponding to the first data in the storage pool.

Optionally, the first identifier is specifically stored in a logical block application tag Meta Tag of the data integrity field DIF corresponding to the first data in the storage pool.

Optionally, the first identifier is stored in a metadata file in the storage pool, and the metadata file is used to record metadata of data stored in the storage pool.

Optionally, the communication unit 601 is further configured to receive a read request. The read request is used to request to read to-be-processed data.

The read/write unit 603 is configured to read the to-be-processed data based on an encryption attribute corresponding to the to-be-processed data. The encryption attribute includes either "encrypted" or "non-encrypted".

Optionally, that the read/write unit 603 is configured to read the to-be-processed data based on an encryption attribute corresponding to the to-be-processed data includes: the read/write unit 603 is configured to obtain an attribute identifier that indicates the encryption attribute corresponding to the to-be-processed data. The read/write unit 603 is configured to read the to-be-processed data based on the encryption attribute indicated by the attribute identifier.

For more detailed descriptions of the communication unit 601, the attribute updating unit 602, and the read/write unit 603, refer to related descriptions in the method shown in FIG. 2 to FIG. 6. Details are not described herein again.

FIG. 8 is a diagram of a structure of a chip according to this application. A chip 70 is configured to implement the data processing method provided in this application. Specifically, the chip may be configured to implement some or all steps in the data processing method. The chip 70 includes:
a processor 701, configured to perform the data processing method provided in this application.

Specifically, the processor 701 may include a general-purpose central processing unit (central processing unit, CPU) and a storage, or the processor 701 may be a microprocessor, a field programmable logic gate array (FPGA), an application-specific integrated circuit (application-specific integrated circuit, ASIC), or the like. In a scenario in which the processor 701 includes the CPU and the storage, the CPU executes computer instructions stored in the storage, to perform the data processing method provided in this application.

In addition, the chip 70 may further include a storage 702. The storage 702 stores computer instructions, and the processor 701 executes the computer instructions stored in the storage, to perform the data processing method provided in this application.

Specifically, the storage 702 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium capable of being for carrying or storing program code in a form of instructions or a data structure and capable of being accessed by a computer, but is not limited thereto.

In addition, the chip 70 may further include an interface 703. The interface 703 may be configured to receive and send data. The interface 702 may be a communication interface, a transceiver, or the like.

In addition, the chip 70 may further include a communication line 704. For example, the communication line 704 may be a data bus, and is configured to transmit information between the foregoing components.

For more detailed descriptions of the chip 70, directly refer to related descriptions in the data processing method. Details are not described herein again.

The method steps in embodiments of this application may be implemented in a hardware manner, or may be implemented in a manner of executing software instructions by the processor. The software instructions include corresponding software modules. The software modules may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to a processor, so that the processor can read information from the storage medium and write information into the storage medium. Certainly, the storage medium may be a constituent part of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc (digital video disc, DVD); or may be a semiconductor medium, for example, an SSD.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, "a plurality of" means two or more, and the same is true to another quantifier. The term "and/or" describes an association relationship between associated objects and indicates that three relationships may exist. For example, A and/or B may indicate the following three cases: Only A exists, both A and B exist, and only B exists. In addition, an element (element) appearing in a singular form with "a", "an", or "the" does not mean "one or only one" unless otherwise specified in the context, but means "one or more than one". For example, "a device" means for one or more such devices. Furthermore, "at least one of (at least one of) ..." means one or any combination of subsequent associated objects. For example, "at least one of A, B, and C" includes A, B, C, AB, AC, BC, or ABC. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A data processing method, comprising:
receiving configuration information; and
updating a first encryption attribute of a storage pool to a second encryption attribute based on the configuration information.

2. The method according to claim 1, wherein the method further comprises:
recording a timestamp of updating the first encryption attribute of the storage pool to the second encryption attribute.

3. The method according to claim 1 or 2, wherein before the updating a first encryption attribute of a storage pool to a second encryption attribute based on the configuration information, the method further comprises:
writing first data to the storage pool based on the current first encryption attribute of the storage pool.

4. The method according to claim 3, wherein the method further comprises:
rewriting the first data to the storage pool based on the second encryption attribute of the storage pool.

5. The method according to claim 3 or 4, wherein the writing first data to the storage pool based on the current first encryption attribute of the storage pool comprises:
writing the first data and a first identifier to the storage pool based on the current first encryption attribute of the storage pool, wherein the first identifier indicates that the first data corresponds to the first encryption attribute.

6. The method according to claim 5, wherein the first identifier is stored in a data integrity field DIF corresponding to the first data in the storage pool.

7. The method according to claim 6, wherein the first identifier is specifically stored in a logical block application tag Meta Tag of the data integrity field DIF corresponding to the first data in the storage pool.

8. The method according to claim 5, wherein the first identifier is stored in a metadata file in the storage pool, and the metadata file is used to record metadata of data stored in the storage pool.

9. The method according to any one of claims 1 to 8, wherein the method further comprises:
receiving a read request, wherein the read request is used to request to read to-be-processed data; and
reading the to-be-processed data based on an encryption attribute corresponding to the to-be-processed data, wherein the encryption attribute comprises either "encrypted" or "non-encrypted".

10. The method according to claim 9, wherein the reading the to-be-processed data based on an encryption attribute corresponding to the to-be-processed data comprises:
obtaining an attribute identifier that indicates the encryption attribute corresponding to the to-be-processed data; and
reading the to-be-processed data based on the encryption attribute indicated by the attribute identifier.

11. A data processing apparatus, comprising:
a communication unit, configured to receive configuration information; and
an attribute updating unit, configured to update a first encryption attribute of a storage pool to a second encryption attribute based on the configuration information.

12. The data processing apparatus according to claim 11, wherein the attribute updating unit is further configured to record a timestamp of updating the first encryption attribute of the storage pool to the second encryption attribute.

13. The data processing apparatus according to claim 11 or 12, wherein the data processing apparatus further comprises a read/write unit, wherein
the read/write unit is configured to write first data to the storage pool based on the current first encryption attribute of the storage pool.

14. The data processing apparatus according to claim 13, wherein the read/write unit is further configured to rewrite the first data to the storage pool based on the updated second encryption attribute of the storage pool.

15. The data processing apparatus according to claim 13 or 14, wherein that the read/write unit is configured to write first data to the storage pool based on the current first encryption attribute of the storage pool comprises:
the read/write unit is specifically configured to write the first data and a first identifier to the storage pool based on the current first encryption attribute of the storage pool, wherein the first identifier indicates that the first data corresponds to the first encryption attribute.

16. The data processing apparatus according to claim 15, wherein the first identifier is stored in a data integrity field DIF corresponding to the first data in the storage pool.

17. The data processing apparatus according to claim 16, wherein the first identifier is specifically stored in a logical block application tag Meta Tag of the data integrity field DIF corresponding to the first data in the storage pool.

18. The data processing apparatus according to claim 15, wherein the first identifier is stored in a metadata file in the storage pool, and the metadata file is used to record metadata of data stored in the storage pool.

19. The data processing apparatus according to any one of claims 11 to 18, wherein the communication unit is further configured to receive a read request, wherein the read request is used to request to read to-be-processed data; and
the read/write unit is configured to read the to-be-processed data based on an encryption attribute corresponding to the to-be-processed data, wherein the encryption attribute comprises either "encrypted" or "non-encrypted".

20. The data processing apparatus according to claim 19, wherein that the read/write unit is configured to read the to-be-processed data based on an encryption attribute corresponding to the to-be-processed data comprises:
the read/write unit is configured to obtain an attribute identifier that indicates the encryption attribute corresponding to the to-be-processed data; and
the read/write unit is configured to read the to-be-processed data based on the encryption attribute indicated by the attribute identifier.

21. A data processing apparatus, comprising a storage and a processor, wherein the storage is configured to store computer instructions, and the processor is configured to invoke the computer instructions from the storage and run the computer instructions, to implement the method according to any one of claims 1 to 10.

22. A storage system, comprising a controller and at least one storage node, wherein the storage node is configured to store data, and the controller is configured to perform the method according to any one of claims 1 to 10.

23. A storage system, comprising a plurality of storage servers, wherein the plurality of storage servers are configured to store data, and one or more of the plurality of storage servers are configured to perform the method according to any one of claims 1 to 10.

24. A chip, comprising a storage and a processor, wherein the storage is configured to store computer instructions, and the processor is configured to invoke the computer instructions from the storage and run the computer instructions, to implement the method according to any one of claims 1 to 10.

25. A computer-readable storage medium, wherein the storage medium stores a computer program, and when the computer program is executed by a processor, the method according to any one of claims 1 to 10 is implemented.
